# EUROPEAN PATENT APPLICATION

(11) **EP 0 733 849 A1**
(43) Date of publication of application: **25.09.1996**
(21) Application number: 95200748.2
(22) Date of filing: 24.03.1995
(51) Int. Cl.: F17D 1/07, F02C 6/06

(54) **Pipeline flow booster system**

(71) Applicant: SHELL INTERNATIONALE RESEARCH MAATSCHAPPIJ B.V., NL-2596 HR Den Haag (NL)
(72) Inventor: Cox, Egbert Leonardus, NL-2288 GD Rijswijk (NL)

(57) **Abstract**

A system for boosting flow in a pipeline (8,12) for the transport of a combustible gas comprises a compressor (1) and turbine (2) with interconnected shafts (3) and a combustion chamber (6) which interconnects the compressor (1) and turbine (2), to which chamber (6) such an amount of oxidant is supplied during operation of the system that a fraction of the mass flow of combustible gas flowing through the system is induced to combust.

## Description

The invention relates to a pipeline flow booster system and more particularly to a system for boosting flow in a pipeline for the transport of a combustible gas, such as natural gas or methane.

In gas transport operations it is common practice to take a slip-stream of the transported gas as a fuel source for the driver. Systems of this type are disclosed in European patent specification No. 71111, French patent specification No. 1035876, German Offenlegungsschrift 2616594 and in US patent specification Nos. 2776087; 3365121 and 4410336.

A common problem of the pressure boosting systems known from these prior art references is that they are bulky, complex and expensive. Accordingly the known systems are not suitable for use at down-hole, remote and offshore locations.

It is an object of the present invention to provide a system for boosting flow in a pipeline for the transport of a combustible gas which is compact, lightweight and can be made at low cost.

In accordance with the invention the system for boosting flow in a pipeline for the transport of a combustible gas thereto comprises:
- a compressor and a turbine which have interconnected shafts, the compressor having an inlet which is connected to the flowline such that at least part of the gas flowing through the flowline is induced to flow into the compressor and the turbine having an outlet which is connected to the flowline at a location downstream from the inlet of the compressor;
- a combustion chamber which interconnects an outlet of the compressor and an inlet of the turbine; and
- oxidant supply means for supplying such an amount of oxidant to the combustion chamber that a fraction of the amount of gas flowing through the system is induced to combust.

An advantage of the system according to the invention over the pressure boosting system disclosed in US patent No. 3365121 is that since the combusted gas is mixed with the transported gas stream there is no requirement of a combustion chamber in which the flue gases of the combusted gas indirectly heat the transported gas via a heat exchanger and from which chamber the combusted gases are discharged into the atmosphere via an exhaust pipe.

Since in the system according to the invention the combusted gas is mixed with the transported gas stream it is preferred to keep the amount of oxidant and combusted gas at a minimum level.

Therefore in a preferred embodiment of the system according to the invention the oxidant supply means comprise an air inlet, means for increasing the amount of oxygen in the air and means for supplying a controlled amount of oxygen enriched air to the combustion chamber.

In an alternative preferred embodiment of the system according to the invention the oxidant supply means consist of means for supplying a controlled amount of a substantially liquid oxidant, such as hydrogen peroxide, to the combustion chamber.

The use of a liquid oxidant enables the use of a small diameter oxidant injection tube, which is important if the system is located at a downhole location in a gas production well. In such case the use of hydrogen peroxide is attractive since this oxidant causes an efficient combustion of natural gas and a relatively low volume of combusted gas. Furthermore, if the system is located downhole, the gravity head of the liquid oxidant will ensure a steady supply of oxidant to the chamber without requiring a high pumping pressure at the wellhead.

Preferably only a minor fraction, e.g. less than 10 percent of the mass flow of combustible gas flowing through the combustion chamber is induced to combust. Accordingly, when compared to conventional gas turbines where usually all combustible gas is combusted in an oxygen-rich environment an inverse combustion takes place in the system according to the invention, whereby only a minor amount of gas is combusted and all oxidant is consumed in a gas rich environment.

It is furthermore preferred that the compressor and turbine are of the axial type and are mounted on a common shaft and the combustion chamber has a substantially annular shape and is co-axially arranged around said shaft at a location between the compressor and the turbine.

Further objects, features and advantages of the present invention will be apparent from the accompanying claims, abstract and drawings, in which:
Figure 1 shows schematically a pipeline flow booster system according to the invention; and
Figure 2 shows schematically a flow booster system according to the invention which is mounted at a downhole location in a natural gas production well.

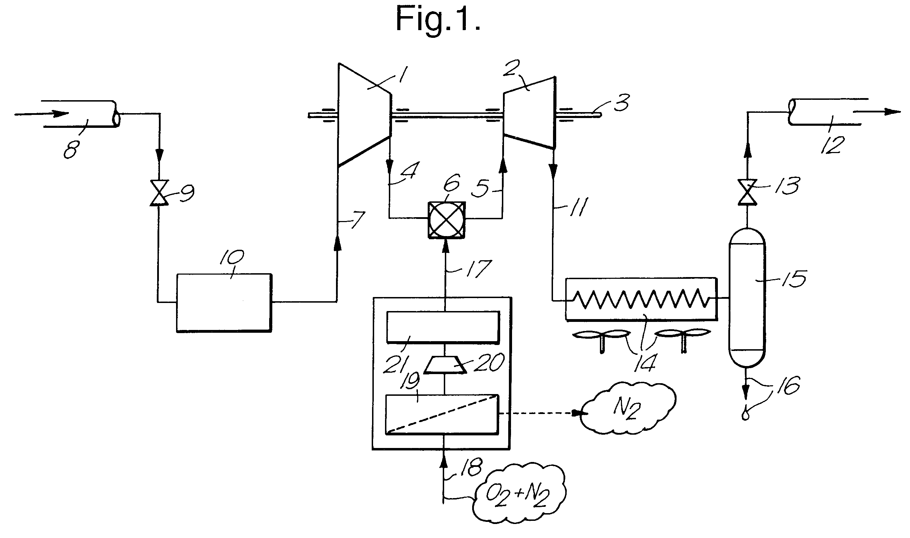

The booster system shown in Figure 1 comprises a gas generator which includes a compressor 1 and a turbine 2. The compressor 1 and turbine 2 are of the dynamic axial type and are mounted on a common shaft 3. The outlet 4 of the compressor 1 is connected to the inlet 5 of the turbine 2 via a combustion chamber 6.

The inlet 7 of the compressor 1 is connected to a low pressure section 8 of a natural gas transport pipeline via a valve 9 and a gas treatment unit 10.

The outlet 11 of the turbine is connected to a high pressure section 12 of a natural gas transport pipeline via a valve 13, a cooling unit 14 and a separation vessel 15 which has at the bottom a discharge 16 for condensate.

The combustion chamber 6 has an inlet 17 through which oxygen enriched air is supplied. This air is obtained by aspiring air from the atmosphere via an air inlet 18, passing the air through a membrane 19 where nitrogen (N₂) is separated from the other components so that oxygen enriched air is formed and passing this oxygen enriched air through an air compressor unit 20 and an air treatment unit 21. The air compressor unit 20 is designed to feed such an amount of oxygen enriched air into the combustion chamber 6 that only a minor portion of the gas passing through the chamber 6 combusts. Yet the amount of combustion is sufficient to induce the turbine 2 to deliver a sufficient amount of torque to the shaft 3 to drive the compressor 1 at a desired rotary speed.

Since the gas combusted in the combustion chamber 6 is mixed with the transported natural gas it is important to reduce the amount of combusted gas to a minimum level.

Hence it is attractive to use oxygen enriched air instead of normal air aspired from the atmosphere.

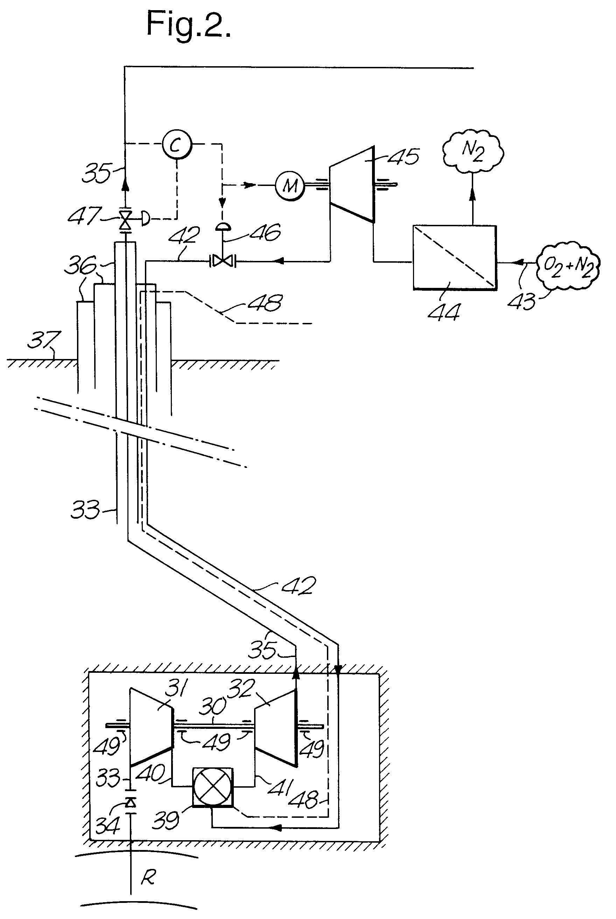

Figure 2 shows an embodiment of the pipeline flow booster system according to the invention where a gas generator comprising a compressor 31 and a turbine 32 is mounted at a downhole location in a gas production well 33.

The inlet of the compressor is formed by a lower portion 33 of a production tubing which comprises a one way valve 34 and which extends into an underground gas reservoir R.

The outlet of the turbine is formed by an upper portion 35 of a production tubing which extends through the wellhead 36 at the earth surface 37.

The compressor 31 and turbine 32 are mounted on a common shaft 38 and a combustion chamber 39 interconnects the outlet 40 of the compressor 31 and the inlet 41 of the turbine 32.

Oxidant, in the form of oxygen enriched air, is supplied to the combustion chamber 39 through an oxidant supply tube 42. Air 43 is supplied to this tube 42 via a membrane 44 in which nitrogen (N₂) is removed and discharged into the atmosphere and an air compressor 45 which is driven by a motor M which may be fuelled by gas produced through the upper portion 35 of the production tubing. A control unit C measures the amount of gas produced through the production tubing and controls the amount of oxidant supplied by adjusting a valve 46 in the oxidant supply tube 42 and/or the motor M of the air compressor 45 and/or a valve 47 in the production tubing 35 at the wellhead 36.

A service umbilical 48 extends through the well to the downhole gas generator for the supply of lubricant to the bearings 49 of the shaft 38, for the transmission of measured data such as speed of shaft revolution, gas velocity and pressure, and for the supply of electrical energy to the downhole measuring equipment and a glow plug (not shown) which is used up to initiate combustion during the start-up phase.

Start-up of the compressor 31 and turbine 32 unit is initiated by injection of nitrogen through the oxidant supply line 42, which nitrogen may be supplied via the nitrogen outlet of the membrane 44 and the combustion chamber 39 into the turbine 32 to spin the shaft 38.

Spinning of the shaft 38 will induce the compressor 31 to deliver natural gas to the combustion chamber 39. Then the membrane 44 is switched such that oxygen enriched air flows into the oxidant supply line 42 and the glow plug in the combustion chamber 39 is activated in order to induce any air entering into the chamber 39 to combust. Once the turbine 32 and compressor 31 have been warmed up and spin at their operating point the glow plug is switched off since spontaneous combustion will take place in the chamber 39.

In downhole operations it is relevant that a small diameter oxidant supply tube 42 is present in the well. Therefore it may be attractive to use a liquid oxidant, such as hydrogen peroxide (H₂O₂) instead of oxygen enriched air.

The warming up of the natural gas in the compressor 31, combustion chamber 39 and turbine 32 is useful since it reduces the amount of condensation in the production tubing. In many natural gas production wells liquids, such as water, condense and accumulate within the production tubing which may cause an unsteady gas production or even kill the well.

It will be understood that instead of mounting the downhole compressor and turbine unit in an underground cavern as shown in Figure 2 it is generally desirable to mount the unit within the production well itself. In that case the turbine and compressor unit will be mounted on an elongate shaft and the combustion chamber will be formed by an annular space which surrounds the shaft at a location between the compressor and turbine.

At any stage of operation of the booster system according to the invention it is important that all oxidant is consumed by combustion in the combustion chamber.

Usually the supply of oxidant is adjusted such that the amount of oxidant supplied to the combustion chamber is low in comparison to the amount of combustible gas transported through the system. For many applications the amount of oxidant supplied to the unit is restricted such that the amount of methane which is combusted for compression is less than 5 to 10% of the net methane mass flow through the pipeline. However, if desired, a fraction of the combustible gas flowing through the system may be fed to the combustion chamber for combustion whereas another fraction of the combustible gas may bypass the combustion chamber. Likewise only a fraction of the combustible gas flowing through the pipeline may be fed to the compressor and turbine unit and be combusted substantially completely in the combustion chamber whereas another fraction of the combustible gas may bypass the compressor and turbine unit and be compressed separately. Such separate compression may be accomplished by mounting a second compressor on the shaft of the compressor and turbine unit and feeding said other fraction of combustible gas to the second compressor, for example via a conduit which co-axially surrounds the compressor and turbine unit.

The preceding examples and described embodiments are only exemplary and reference to the following claims should be made to determine the full scope of the present invention.

## Claims

1. A system for boosting flow in a pipeline for the transport of a combustible gas, comprising:
- a compressor and a turbine which have interconnected shafts, the compressor having an inlet which is connected to the flowline such that at least part of the gas flowing through the flowline is induced to flow into the compressor and the turbine having an outlet which is connected to the flowline at a location downstream from the inlet of the compressor;
- a combustion chamber which interconnects an outlet of the compressor and an inlet of the turbine; and
- oxidant supply means for supplying such an amount of oxidant to the combustion chamber that a fraction of the amount of gas flowing through the system is induced to combust.

2. The system of claim 1, wherein the oxidant supply means comprise an air inlet, means for increasing the amount of oxygen in the air and means for supplying a controlled amount of oxygen enriched air to the combustion chamber.

3. The system of claim 1, wherein the oxidant supply means consist of means for supplying a controlled amount of a substantially liquid oxidant to the combustion chamber.

4. The system of claim 3, wherein the oxidant supply means consist of means for supplying substantially liquid hydrogen peroxide to the combustion chamber.

5. The system of any one of claims 1-4, wherein the turbine and compressor are mounted on a common shaft and the combustion chamber has a substantially annular shape and is co-axially arranged around said shaft at a location between the compressor and the turbine.

6. The system of claim 5, wherein the compressor and turbine are of the axial type.

7. The system of any one of claims 1-6, wherein the whole amount of gas flowing through the pipeline is induced to flow into the inlet of the compressor and the oxidant supply means are designed to supply such an amount of oxidant to the combustion chamber that a minor part of the gas flowing through the chamber is induced to combust.
